# EUROPEAN PATENT APPLICATION

(11) **EP 3 486 396 A1**
(43) Date of publication of application: **22.05.2019**
(21) Application number: 18207229.8
(22) Date of filing: 20.11.2018
(51) Int. Cl.: E04D 3/36, E04B 1/76, F16B 21/16

(54) **FASTENER AND METHOD FOR FASTENING AN INSULATION BOARD**

(30) Priority: 21.11.2017 FI FI
(71) Applicant: Ketolainen, Kullervo, 65730 Vaasa (FI)
(72) Inventor: Ketolainen, Kullervo, 65730 Vaasa (FI)
(74) Representative: Kinnunen, Kari Tapio

(57) **Abstract**

A fastener (120, 220) for fastening an insulation board (102, 104) to a structure (100), comprising a planar hat part (122, 222) for pressing the insulation board against the structure. The fastener comprises an adjustment arm (140, 240), which adjustment arm comprises a fastening part (142) for fastening the adjustment arm to the structure, and which hat part is arranged movable with respect to the adjustment arm, and which fastener further comprises locking members (144, 146, 150) for locking the hat part with respect to the adjustment arm.

## Description

### FIELD

The present invention relates to a fastener and method for fastening an insulation board.

### BACKGROUND

Insulation of gradually sloping flat roofs, such as those of industrial buildings or such, is typically carried out by fastening an insulation layer to a concrete or tin roof, after which e.g. bitumen can be installed as roof covering on top of the insulation.

It is important that the thermal insulation boards are fastened well to the tin or concrete structure, since in windy conditions forces acting on the insulation layer can be very significant thus risking the staying of the insulation layer in place. Fastening of the insulation boards is typically carried out by means of mechanical fasteners, which may be needed two pieces per square meter in the middle of the roof, and four pieces per square meter at the edges of the roof.

A typical structure of a known fastener is such that there is a hat portion connected to a tube portion leading through the insulation. In the middle of the hat portion there is a hole for fitting a screw to the tube portion. The tube portion is open or at least partly convergent at its lower end, whereby the convergent tube portion limits movement of the screw and at the same time tightening the hat portion against the insulation.

A disadvantage in known solutions is a need for a plurality of fasteners having different lengths. Additionally, the known fasteners suit poorly to usage situations where the thickness of the roof insulation varies on the roof. It is thus evident that there is a need for a new and more versatile fastener.

### BRIEF DESCRIPTION

The purpose of the invention is to provide a solution to at least partly remove the above problem. This objective is achieved with an invention being defined in the independent claims. Preferred embodiments are defined in the dependent claims.

The invention provides the advantage that the insulation can be fastened optimally in all parts of the roof.

### DRAWINGS

The invention and its preferred embodiments are shown in the accompanying drawings, where
Figure 1 shows an embodiment of a fastening arrangement;
Figure 2 shows a top view of a fastener according to an embodiment;
Figure 3 shows a fastener when seen from a side;
Figure 4A illustrates an adjustment arm;
Figure 4B shows an adjustment arm around which there is arranged a support flange;
Figure 5A shows a top view of the adjustment arm of Figure 4A;
Figure 5B shows a top view of an adjustment arm of Figure 4B;
Figure 6 shows another embodiment of a fastener; and
Figure 7 shows the fastener of Figure 6 specified with respect to some parts.

### DETAILED DESCRIPTION

The embodiments relate to fastening of insulation boards on a roof, especially on a flat or a gradually sloping roof. Such roof types are applied on large flat roof surfaces in industrial or warehouse buildings, shopping centres or such.

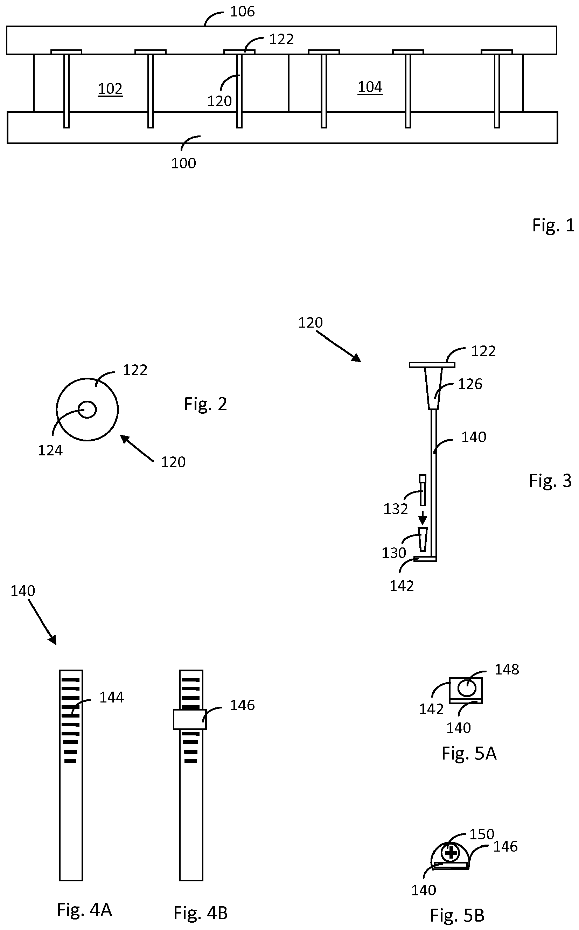

Figure 1 shows on coarse level the application environment of the invention, and application of a structure according to the invention therein.

Figure 1 shows a lower roof structure 100, which may be a concrete structure or a corrugated metal structure, for instance. Above the lower roof structure, insulation boards 102, 104 have been arranged as a flat uniform layer.

The insulation boards have been fixed by means of mechanical fasteners 120 to the lower roof structure 100. The mechanical fasteners typically include a screw which may, depending on the base, either penetrate through the lower roof structure, or alternatively penetrate a certain distance to the lower structure. For instance, in case of a tin structure, the screw may penetrate through the structure but in case of a concrete structure, the screw may not necessarily penetrate through the structure but only penetrates a sufficient distance into it. There may typically be two fasteners 120 per square meter, for instance, at the middle of the roof but four per square meter at the edge areas of the roof where the stress due to wind is the greatest. Even though Figure 1 shows that the hat portion 122 in the top of the fastener would remain over the insulation boards, practically the fasteners are preferably fastened to the insulation so tightly that also the hat portions at least to some extent sink into the insulation.

Figure 1 also shows the roof covering 106, which can be e.g. felt roofing, installed on top of the insulation plates.

It is clear that the roof structure can also include other structural layers, such as a moisture barrier or similar, and the shown insulation layer can practically consist of several separate layers but showing those is not substantial in this context.

Figure 2 shows a fastener 120 according to the embodiments from top, that is, from the mounting direction whereby the hat portion 122 is visible. To the hat portion of the roof fastener, there has been formed a central opening 124, which provides access to a tube part below the hat portion, which tube part is illustrated more in detail in other figures. It is clear that even though the hat portion has in Figure 1 been presented as having the form of a circle, the hat portion can also take other forms.

Figure 3 shows a side view of one embodiment of the fastener. In top portion of the fastener, there is a tubular and hollow portion 126 connected to the hat portion. Preferably the hat portion 122 and the tubular portion 126 belong to the same plastic casting piece. The tubular portion is at least partly convergent downwards. The convergence can be implemented as uniform convergence downwards from the hat portion, or alternatively, the tube part has a constant diameter a certain distance below the hat portion and the convergence has been implemented in the bottom part of the tubular part 126.

The fastener also comprises a strip-like metallic adjustment arm 140. To give an example of one embodiment, the adjustment arm has width being 10 mm, thickness being 2 mm and length being 30 cm. It is evident that the invention is by no means limited to these exemplary dimensions of the adjustment arm but they can vary in many ways according to the application area. Some other embodiments of the width of the strip include 7,6 mm or 13 mm, for instance.

The adjustment arm comprises in its lower portion a mounting portion 142, which may have been formed from the adjustment arm by bending. To the mounting portion, there has been preferably formed a through-hole for fastening of the fastener and especially the adjustment arm 140 to the lower structure, such as tin roof.

Fastening of the adjustment arm to the underlying structure can be carried out with a bottom fastener 130. The bottom fastener can be, for instance, a separate, tubular and hollow plastic piece. The bottom fastener 130 is preferably open from its top part for receiving a fastening member 132, such as a tin- or concrete screw and also from its bottom part at least partly open so that the screw part of the fastening member can penetrate through it. The function of the bottom fastener is to facilitate fastening of the adjustment arm to the underlying structure by supporting the screw 132 and by guiding a drill bit when fastening the adjustment arm. The bottom fastener may have been designed such that it is capable of stopping the head of the fastening member 132 when screwing down the fastening member to the lower structure, even though that is not necessary. Thereby the bottom fastener may be convergent throughout its length or it may have a constant diameter in the top part and convergent only from its lower part.

Figure 4A shows the adjustment arm 140 from the direction of its wider side, that is, the adjustment arm of Figure 3 has been rotated 90 degrees.

On the top surface of the adjustment arm shown in Figure 4A has been formed an adjustment pattern 144, which may be a group of protrusions or grooves which may have been formed by pressing or hitting from the opposite side of the adjustment arm. In Figure 4A, the protrusions have been presented, due to clarity, as horizontal but practically they are preferably a little slanted compared to the horizontal level thereby facilitating a threaded member, such as a screw moving from a protrusion to another similarly as a screw is arranged to move in known hose clamps.

Figure 4B shows the adjustment arm of Figure 4A from its front side but now a support flange 146 has been fitted around the adjustment arm 140. The function of the support flange is to partially support a threaded member therein, which threaded member can thus be moved with respect to the protrusions of the adjustment arm by screwing the threaded member. The support flange according to Figure 4B sets, when mounted, inside the tubular portion 126, whose partial convergent form limits movement of the support flange and threaded member downwards.

Figure 5A shows the adjustment arm of Figure 4A as a top view, when there are visible the vertically setting frame part 140 and to the side setting mounting part 142, which has a hole 148 for receiving the fastening member 132 when fastening the adjustment arm to the underlying structure.

Figure 5B, on the other hand shows the adjustment arm according to Figure 4B, which comprises a support flange 146 surrounding the threaded member 150, such as screw of bolt, at least from the area of the threading. Thereby the support flange surrounds the adjustment arm 140 from all sides and the threaded member sets in front of the adjustment arm.

In the following, mounting of the fastener according to the embodiments to the target is now explained.

Initially, we reside in the situation of Figure 3. Part of the adjustment arm 140 resides inside the top fastener 122, 126 and especially the support flange 146 shown in Figure 4B resides inside the tubular portion of the top fastener.

The mounting starts, however, from the bottom fastener 130. In the first stage, the installer sets the fastening member 132 to the bottom fastener 130 and fits the fastening member 132 to the place, and through the hole 148 of the mounting portion 142 of the adjustment arm 140. After this, the installer screws and attaches with a long drill bit the fastening member 132 into the lower structure whereby the lower fastener 130 sets against the mounting portion 142 and the base portion of the fastening member 132 supports to the walls of the lower fastener 130. With the first stage described above the adjustment arm 140 can be tightly fastened to the lower structure.

In the second stage of the mounting work, the installer screws the threaded member 150 illustrated in Figure 5A, which is visible in the mounting situation from the hole in the hat portion 122. When the installer screws the mentioned threaded member, the threaded member moves with respect to the adjustment portion 144 of the adjustment arm, whereby the hat portion 122 of the fastener pressed tightly against the insulation thus tightening the insulation to the underlying structure.

Even though the figures do not specifically illustrate, there can be a hole in the side of the tubular portion 126, where the top part of the adjustment arm penetrates through and gets to turn to a side, for instance, supported by a lower surface of the hat portion 122. In this way, in the mounting situation, when the hat portion presses against the insulation, the top part of the adjustment arm penetrates into the insulation, and does not remain on top of the insulation where it could cause hazardous situations for people moving on the roof, and could harm mounting of the roof covering.

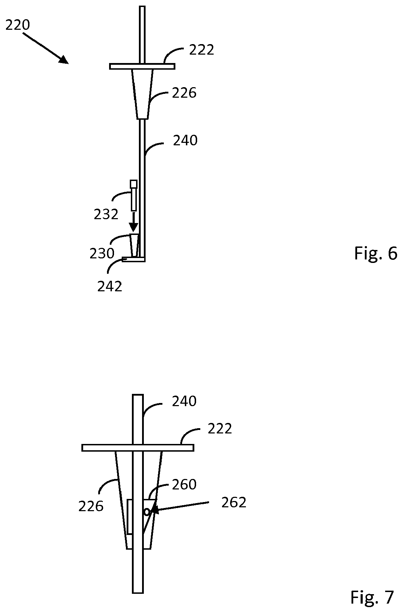

Figures 2-5 show one embodiment for fastening members according to the invention. Figures 6 and 7 highlight another embodiment according to the invention.

Figure 6 shows a situation corresponding to Figure 2 when the whole fastener 220 is visible. As in Figure 2, the fastener comprises a hat portion 222, a tube-like portion associated with the hat portion and an adjustment arm. The adjustment arm 240 passes through the tubular top part and the hat portion.

Figure 6 also shows a lower fastener 230, the fastening member 232 passing through it and the fastening portion 242 of the adjustment arm, which is formed, for instance, by bending from the adjustment arm or can be a separate part connected to the adjustment arm. Figure 6 shows that the tubular lower fastener 230 is attached to the adjustment arm 240. Both embodiments, either that the tubular lower fastener is attached to the adjustment arm, or is separate to it, are possible in the invention. The function of the lower fastener is to help guiding and attaching of the fastening member 232 to the lower structure. In one embodiment, it is also possible that there is no lower fastening member but the fastening member is directly attached to the fastening portion 242.

As shown in the embodiment of Figure 6, the strip-like adjustment arm extends also above the hat part 222, whereby the installer can grip it by hand.

Figure 7 specifies the embodiment with regard to the tube-like structure 226 and the fastening members 260, 262. The embodiment of Figures 6 and 7 is based on a so called friction joint. Thereby the fastening members do not comprise a threaded member 150 at all, which was shown in the embodiment of Figure 5B.

The fastener of Figure 7 is mounted such that the installer grips the adjustment arm 240 by a hand or by a tool, and presses with a foot, for instance, the hat portion arranged freely movable with respect to the adjustment arm whereby the hat portion and the thereto firmly connected upper tube-part 226, and inside of that residing locking chamber 260 sink downwards. When the installer has pressed the hat portion to the suitable depth into the wool insulation, the locking ball 262 locks to the locking chamber with a friction joint thus locking the adjustment arm immobile with respect to the tube part 226. With the friction joint, a fixing force of 500 N, for instance, can be achieved.

In the embodiment of Figures 6 and 7, the surface of the adjustment arm can be smooth, that is, there is no need to form grooving according to the first embodiment.

In one embodiment, a cutting or a slot can be formed to the side of the hat portion, when the portion of the adjustment arm residing above the hat portion after mounting can be attached to the hat portion, and the portion remaining over can either be pressed to the insulation or be cut off.

Figure 7 shows that the locking chamber is, at least on one side of the adjustment arm 240, conical or convergent downwards for locking of the locking ball or pellet by a friction joint. In the embodiment of Figure 7, as also in the first embodiment, the tubular portion 226 is at least partly convergent downwards for preventing the movement of the locking chamber 262 below the tube-like upper portion.

The invention provides significant advantages compared to structures according to the prior art. One significant advantage is that one fastener is applicable to a plurality of different insulation thicknesses, whereas in the present solutions, there is a need for a plurality of fasteners having different lengths. In practical roof works, the insulation thicknesses can differ with about 50 %, for instance, depending on sloping of the roof.

Another significant advantage is that the fastener fastens well on the whole area of the roof. Even though the roof would have been designed for a certain insulation thickness, the insulation may be dipped in some places, whereby the planned fastener fails to operate optimally and the insulation fails to attach the structure properly. With the solution of the present invention, small variations in the insulation thickness in various parts of the roof do not matter, but because the fastener adapts to the thickness of the insulation, the insulation can in all areas be fastened equally efficiently.

With the above described second embodiment (Figures 6 and 7), significant advantages can be achieved with respect to installation speed, because the mounting of the hat portion in the top part does not require any use of screwing tools, but pressing of the hat portion and locking can be done with help of hands and feet only when only the lower portion of the adjustment arm has been attached to the structure.

It is evident that when the technology advances, the inventive idea can be implemented in different ways. The invention and its embodiments are thus not limited to embodiments presented above but can vary in the scope of the claims.

## Claims

1. A fastener (120, 220) for fastening an insulation board (102, 104) to a structure (100), comprising a planar hat part (122, 222) for pressing the insulation board against the structure, **characterized in that** the fastener comprises an adjustment arm (140, 240), which adjustment arm comprises a fastening part (142) for fastening the adjustment arm to the structure, and which hat part is arranged movable with respect to the adjustment arm, and which fastener further comprises locking members (144, 146, 150) for locking the hat part with respect to the adjustment arm.

2. A fastener according to claim 1, **characterized in that** the fastener comprises a tube part (126) associated with the hat part (122), which tube part is at least partly convergent away from the hat part to limit movement of the locking members (144, 146, 150) arranged inside the tube part.

3. A fastener according to claim 1 or 2, **characterized in that** the locking members comprise a at least partly convergent locking chamber (260), and inside of the locking chamber (260) fitted locking ball (262) for locking the adjustment arm (240), passing through the locking chamber (260), by means of the friction joint.

4. A fastener according to claim 1 or 2, **characterized in that** the locking members comprise adjustment pattern (144) formed on the adjustment arm, and that the fastener comprises a support flange (146) arranged around the adjustment arm, and in connection with the support flange is arranged a threaded member (150) for co-operation with the adjustment pattern (144) of the adjustment arm (140) for moving the support flange with respect to the adjustment arm, and the fastener comprises a tube-like top part (126) connected to the hat part and the support flange (146) is fitted inside the tubular top part, and which hat part comprises an opening to the tubular top part (126) for screwing the threaded member therein for moving the tubular top part (126) and the hat part (122) connected thereto with respect to the adjustment arm (140).

5. A fastener according to any preceding claim, **characterized in that** the fastener comprises an at least partly tubular lower fastener (130) for receiving a fastening member (132), which lower fastener (130) is arranged to support and limit the movement of the fastening member (132) when attaching the adjustment arm (140) from its fastening part (142) to the structure with the fastening member (132), and that the fastening part (142) of the adjustment arm has been formed from the adjustment arm by bending to a side, which fastening part (142) comprises an opening (148) for receiving the fastening member (132) that has penetrated through the lower fastening member (130).

6. A fastener according to any preceding claim, **characterized in that** the fastener comprises a tube-like portion (126, 226) associated with the hat part (122, 222), and the adjustment arm (140, 240) passes through the tube-like portion and the hat part.

7. A fastener according to any preceding claim, **characterized in that** the fastening part (142, 242) is formed by bending from the adjustment arm (140, 240).

8. A fastener according to claim 7, **characterized in that** the fastening part (142, 242) comprises a through hole for fastening the adjustment arm to the structure.

9. A fastener according to any preceding claim, **characterized in that** the fastener comprises a tubular lower fastener (130, 230), which is a separate part from the adjustment arm (140, 240).

10. A fastener according to any preceding claim, **characterized in that** the adjustment arm (140, 240) is a strip-like and metallic adjustment arm.

11. A fastener according to any preceding claim, **characterized in that** the hat part (122, 222) comprises a central opening (124) which provides access to a tube part (126, 226) below the hat part (122, 222).

12. A fastener according to claim 1, **characterized in that** the adjustment arm (240) has a smooth surface.

13. A fastener according to claim 1, **characterized in that** the fastener comprises an at least partly tubular lower fastener (130) for receiving a fastening member (132), which lower fastener (130) is arranged to support and limit the movement of the fastening member (132) when attaching the adjustment arm (140) from its fastening part (142) to the structure with the fastening member (132).

14. A fastener according to claim 1, **characterized in that** the locking chamber (260) is, at least on one side of the adjustment arm (240), conical or convergent downwards for locking of a locking ball (262) or pellet by a friction joint.

15. A method for fastening an insulation board to a structure, **characterized by** comprising:
fastening an adjustment arm (140, 240) to a structure;
moving a hat portion (122, 222) along the adjustment arm such that it presses against the insulation board (102, 104), whereby the hat portion becomes locked with respect to the adjustment arm.
